(19) Europäisches Patentamt
European Patent Office
Office européen des brevets

(11) EP 1 167 448 A2

(12) # EUROPEAN PATENT APPLICATION

(43) Date of publication:
**02.01.2002 Bulletin 2002/01**

(21) Application number: **01114744.4**

(22) Date of filing: **22.06.2001**

(51) Int Cl.[7]: **C08L 69/00**
// (C08L69/00, 83:04, 51:04), (C08L69/00, 27:12, 25:08)

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.06.2000 JP 2000194519**
**28.06.2000 JP 2000194520**

(71) Applicant: **IDEMITSU PETROCHEMICAL CO., LTD.**
**Tokyo 130-0015 (JP)**

(72) Inventors:
- **Okamoto, Masaya**
  **Ichihara-shi, Chiba-ken (JP)**
- **Kitayama, Masahiro**
  **Ichihara-shi, Chiba-ken (JP)**
- **Nodera, Akio**
  **Ichihara-shi, Chiba-ken (JP)**

(74) Representative:
**Gille Hrabal Struck Neidlein Prop Roos**
**Patentanwälte Brucknerstrasse 20**
**40593 Düsseldorf (DE)**

(54) **Polycarbonate resin composition and shaped article**

(57) The polycarbonate resin composition of the present invention comprises (A) a copolyester carbonate having an aliphatic segment or a polycarbonate resin mixture containing the copolyester carbonate; (B) a functionalized silicone compound; and (C) a core-shell type rubber-like graft elastomer. Another polycarbonate resin composition of the present invention comprises a resin mixture comprising (A') a copolyester carbonate having an aliphatic segment or a polycarbonate resin mixture containing the copolyester carbonate and (B') a styrene resin; and (C') a polyfluoroolefin resin. By the combined use of the copolyester carbonate having an aliphatic segment with the functionalized silicone compound and the core-shell type rubber-like graft elastomer, or with the styrene resin and the polyfluoroolefin resin, the moldability/extrudability, i.e., melt fluidity, of the polycarbonate composition is improved while retaining the good impact resistance inherent to polycarbonate resin, thereby enabling the production of thin-wall shaped articles. The polycarbonate resin composition of the present invention is also improved in the flame retardancy without using a halogen- or phosphorus-containing flame retardant, and is therefore excellent in the heat resistance and the recyclability.

EP 1 167 448 A2

## Description

BACKGROUND OF THE INVENTION

1. Field of the Invention

The present invention relates to a polycarbonate resin composition, and more particularly to a polycarbonate resin composition which is improved in the moldability, i.e., the melt fluidity without reducing its inherent impact resistance and provided with a good flame retardancy without using a halogen-or phosphorus-containing flame retardant.

2. Description of the Prior Art

Polycarbonate resins have been extensively used in various applications including electric and electronic devices such as office automation (OA) devices, information and telecommunication devices and domestic electric appliances, automobiles, and building materials because of their excellent impact resistance, heat resistance and electric properties. The polycarbonate resins are usually self-extinguishing, but have been required to show a much higher flame retardancy especially when applied to OA devices, information and telecommunication devices and electric and electronic devices. To meet the requirement, it has been attempted to improve the flame retardancy by adding various flame retardants to the polycarbonate resins.

Conventionally, the flame retardancy of the polycarbonate resins has been improved by halogen-containing flame retardants such as halogenated bisphenol A and halogenated polycarbonate oligomers, in view of their good flame retardant efficiency, with the aid of flame retardant assistants such as antimony oxide. Recent market's demand has been directed to use of a halogen-free flame retardant to ensure safety and avoid adverse influence on environments upon disposal and incineration. As the halogen-free flame retardants, various organophosphorus flame retardants, especially organophosphoric esters, have been proposed because of their high ability of providing an excellent flame retardancy to polycarbonate resins and their action as a plasticizer.

To render the polycarbonate resins flame retardant, a relatively large amount of the phosphoric ester is required. Also, owing to a high molding, extruding or forming temperature and a high melt viscosity of the polycarbonate resins, the molding, extruding or forming process must be performed at a higher temperature for producing thinner-wall or larger-size shaped articles. The phosphoric ester contributes to improvement in the flame retardancy, but not necessarily sufficient in providing good working conditions and producing shaped articles with good appearance because it is corrosive to mold and generates harmful gases. Further, the use of the phosphoric ester causes reduction of the impact resistance and the color change in the shaped articles when kept under heating or under high-temperature and high-humidity conditions. Furthermore, the polycarbonate resin containing such a phosphoric ester has a poor recyclability due to insufficient heat stability of the phosphoric ester, thereby failing to meet recent requirement for saving of resources.

It is known to render the polycarbonate resin flame retardant by incorporating a silicone compound, thereby preventing the generation of harmful gases upon combustion. For example, Japanese Patent Application Laid-Open No. 10-139964 discloses a flame retardant silicone resin having a specific chemical structure and molecular weight. Although this flame retardant produces a certain success in making the polycarbonate resin flame retardant, the resultant shaped articles tend to be insufficient in impact resistance.

United States Patent Nos. 3,971,756, 4,387,176 and 5,100,958, and Japanese Patent Application Laid-Open Nos. 6-306265, 8-12868 and 8-295796, etc. also disclose flame retardant polycarbonate resins containing silicones. In the proposed flame retardant polycarbonate resins, the silicones are used as improvers for the dripping resistance rather than flame retardants. In fact, to impart a flame retardancy, it is essentially required to use a flame retardant such as a phosphoric ester and a salt of metal in group II of the periodic table in combination with the silicones. Namely, the silicones are different, in function and effect, from the silicone compound described in Japanese Patent Application Laid-Open No. 10-139964. Further, the used of the silicones in combination with the flame retardant causes reduction in the moldability, extrudability, and physical properties of the polycarbonate resin.

Japanese Patent Application Laid-Open No. 8-81620 discloses a flame retardant polycarbonate resin composition comprising a polycarbonate resin, a polycarbonate-polyorganosiloxane copolymer and a fibrillatable polytetrafluoroethylene. This composition shows an excellent flame retardancy when the polyorganosiloxane is contained in a limited small amount. Despite the excellent flame retardancy, like Japanese Patent Application Laid-Open No. 10-139964, the composition tends to be insufficient in impact resistance inherent to polycarbonate resins and insufficient in moldability and extrudability.

## SUMMARY OF THE INVENTION

In view of the problems in the prior art, an object of the present invention is to provide a polycarbonate resin composition which is improved in the moldability and extrudability, i.e., the melt fluidity without reducing its inherent impact resistance, and improved in the flame retardancy without using a halogen- or phosphorus-containing flame retardant.

Another object of the present invention is to provide a polycarbonate resin composition which is improved in the moldability and extrudability, i.e., the melt fluidity without reducing its inherent impact resistance to enable the production of a thin-wall shaped article, and also improved in the flame retardancy without using a halogen- or phosphorus-containing flame retardant.

A further object of the present invention is to provide a shaped article of the improved polycarbonate resin composition.

As a result of extensive researches for enhancing the flame retardancy of polycarbonate resins by a silicone compound and simultaneously improving the impact resistance, heat resistance, recyclability, moldability, and extrudability, the inventors have found that a polycarbonate resin composition comprising a specific polycarbonate resin, a small amount of a specific silicone compound, and a specific rubber-like elastomer is considerably improved in the moldability, extrudability and flame retardancy without reducing the impact resistance.

The inventors have further found that a combination of the specific polycarbonate resin, a styrene resin and a specific fluororesin provides a flame-retardant polycarbonate resin composition which is considerably improved in moldability and extrudability with the impact resistance retained at high level, and found that the flame retardancy is further improved, without using a halogen- or phosphorus-containing flame retardant, by the combined use of the specific silicone compound. The present invention has been accomplished based on these findings.

Thus, in a first aspect of the present invention, there is provided a polycarbonate resin composition comprising (A) 100 parts by mass of a copolyester carbonate having an aliphatic segment or a polycarbonate resin mixture containing the copolyester carbonate; (B) 0.1 to 10 parts by mass of a functionalized silicone compound; and (C) 0.2 to 10 parts by mass of a core-shell type rubber-like graft elastomer.

The component A preferably contains a polycarbonate-polyorganosiloxane copolymer in an amount of 0.1 to 10% by mass based on the total weight of the component A. In addition, the polycarbonate resin composition preferably contains (D) a polyfluoroolefin resin in an amount of 0.02 to 5 parts by mass based on 100 parts by mass of the component A.

In a second aspect of the present invention, there is provided a polycarbonate resin composition comprising 100 parts by mass of a resin mixture comprising (A') 1 to 99% by mass of a copolyester carbonate having an aliphatic segment or a polycarbonate resin mixture containing the copolyester carbonate and (B') 99 to 1% by mass of a styrene resin; and (C') 0.01 to 5 parts by mass of a polyfluoroolefin resin.

The component A' preferably contains a polycarbonate-polyorganosiloxane copolymer in an amount of 0.1 to 10% by mass based on the total weight of the component A'. The component B' is preferably a rubber-modified styrene resin. In addition, the polycarbonate resin composition may further contains (D') 0.1 to 10 parts by mass of a functionalized silicone compound and/or (E') 1 to 100 parts by mass of an inorganic filler based on 100 parts by mass of the resin mixture of the components A' and B'.

In a third aspect of the present invention, there is provided a shaped article of the polycarbonate resin composition according to the first or second aspect of the present invention.

## BRIEF DESCRIPTION OF THE DRAWING

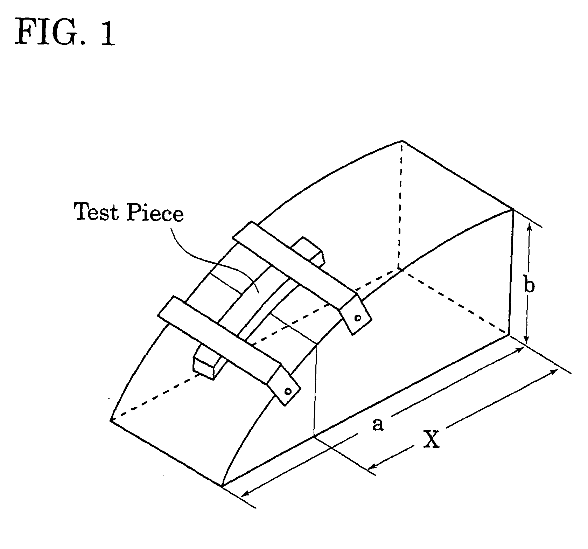

Fig. 1 is a perspective view of a jig mounting a test piece used for evaluating a grease resistance of the composition of the present invention.

## DETAILED DESCRIPTION OF THE INVENTION

The present invention will be described in detail below.

### 1. First Polycarbonate Resin Composition

The first polycarbonate resin composition comprises (A) 100 parts by mass of a copolyester carbonate having an aliphatic segment or a polycarbonate resin mixture containing the copolyester carbonate; (B) 0.1 to 10 parts by mass of a functionalized silicone compound; and (C) 0.2 to 10 parts by mass of a core-shell type rubber-like graft elastomer.

COMPONENT A: Copolyester Carbonate or Polycarbonate Resin Mixture

The copolyester carbonate (hereinafter occasionally referred to merely as "PC-PMDC copolymer") of the component A is not particularly restricted, and may include, for example, a copolymer comprising an aromatic polycarbonate segment and a polyester segment derived from a dihydric phenol and a polymethylenedicarboxylic acid, preferably a copolymer comprising an aromatic polycarbonate segment composed of a structural unit represented by the following Formula 1:

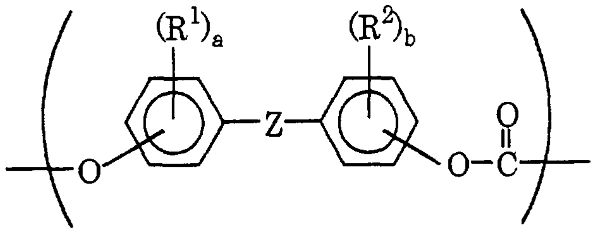

(1)

and a polyester segment having a structural unit represented by the following Formula 2:

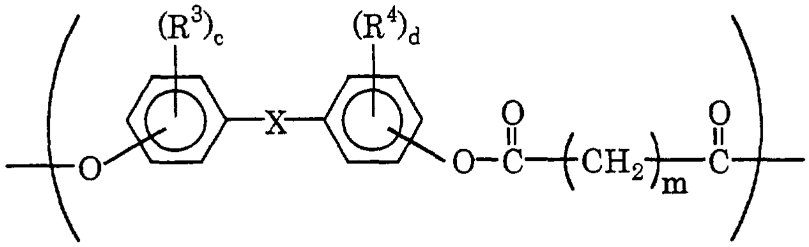

(2)

In Formula 1, $R^1$ and $R^2$ represent $C_1$-$C_6$ alkyl or phenyl, and may be the same or different.
Z represents a single bond, $C_1$-$C_{20}$ alkylene, $C_1$-$C_{20}$ alkylidene, $C_5$-$C_{20}$ cycloalkylene, $C_5$-$C_{20}$ cycloalkylidene, $-SO_2-$, -SO-, -S-, -O- or -CO-. Of these groups, preferred is isopropylidene.
The subscripts a and b are independently an integer of 0 to 4, preferably 0.
In Formula 2, $R^3$ and $R^4$ represent $C_1$-$C_6$ alkyl or phenyl, and may be the same or different.
X represents a single bond, $C_1$-$C_{20}$ alkylene, $C_1$-$C_{20}$ alkylidene, $C_5$-$C_{20}$ cycloalkylene, $C_5$-$C_{20}$ cycloalkylidene, $-SO_2-$, -SO-, -S-, -O- or -CO-. Of these groups, preferred is isopropylidene.
The subscripts c and d are independently an integer of 0 to 4, preferably 0. The subscript m is an integer of 5 to 20, preferably 8 to 12.
The PC-PMDC copolymer has a viscosity-average molecular weight of preferably 10.000 to 40,000, more preferably 12,000 to 30,000 when measured by a method described below.
The PC-PMDC copolymer can be produced, for example, by the following method. A polycarbonate oligomer constituting the aromatic polycarbonate segment (hereinafter occasionally referred to merely as "PC oligomer") and polymethylenedicarboxylic acid are dissolved in a solvent such as methylene chloride, chlorobenzene and chloroform. The resultant solution is mixed with a caustic alkali aqueous solution of a dihydric phenol, and then with tertiary amine such as triethylamine or quaternary amine such as trimethylbenzylammonium chloride as a catalyst. The mixture is subjected to interfacial polycondensation in the presence of an end modifier.
The PC oligomer may be produced by the same method for the production of ordinary polycarbonate resins. For example, the PC oligomer is easily produced by reacting a dihydric phenol with a carbonate precursor such as phosgene and a carbonic ester in a solvent such as methylene chloride.
More specifically, the PC oligomer is produced by the reaction between a dihydric phenol with a carbonate precursor such as phosgene or the transesterification between a dihydric phenol and a carbonate precursor such as diphenyl carbonate in a solvent such as methylene chloride.
Examples of the dihydric phenol are bis(4-hydroxyphenyl)alkanes such as 4,4'-dihydroxydiphenyl, 1,1-bis (4-hydroxyphenyl)methane, 1,1-bis(4-hydroxyphenyl)ethane, 2,2-bis(4-hydroxyphenyl)propane; bis(4-hydroxyphenyl) cycloalkanes; bis(4-hydroxyphenyl)oxides; bis(4-hydroxyphenyl)sulfides; bis(4-hydroxyphenyl)sulfones; bis(4-hydroxyphenyl)sulfoxides; bis(4-hydroxyphenyl)ethers; and bis(4-hydroxyphenyl)ketones. Of these dihydric phenols, preferred is 2,2-bis(4-hydroxyphenyl)propane (bisphenol A). These dihydric phenols may be used alone or in combination

of two or more.

Examples of the carbonic esters are diaryl carbonates such as diphenyl carbonate, and dialkyl carbonates such as dimethyl carbonate and diethyl carbonate.

The PC oligomer used for the production of the PC-PMDC copolymer may be a homopolymer derived from only one kind of dihydric phenol or a copolymer derived from two or more. Also, the PC oligomer may be a thermoplastic branched random polycarbonate obtained using a polyfunctional aromatic compound in combination with the dihydric phenol. Examples of the branching agent (polyfunctional aromatic compound) include 1,1,1-tris(4-hydroxyphenyl) ethane, α,α', α"-tris (4-hydroxyphenyl)-1,3,5-triisopropylbenzene, 1-[α-methyl-α-(4'-hydroxyphenyl)ethyl]-4-[α',α'-bis (4"-hydroxyphenyl)ethyl]benzene, phloroglucin, trimellitic acid and isatin bis(o-cresol).

The molecular weight of the PC-PMDC copolymer may be controlled by a molecular weight modifier such as phenol, p-t-butylphenol, p-t-octylphenol, p-cumylphenol, p-decylphneol, p-dodecylphenol and p-petadecylphenol.

The polymethylenedicarboxylic acid has a $C_5$-$C_{20}$, preferably $C_8$-$C_{12}$ polymethylene group.

In the above production method, the PC-PMDC copolymer is generally produced in the form of a mixture containing by-produced aromatic polycarbonate resins. The resultant mixture of the PC-PMDC copolymer preferably has a viscosity-average molecular weight of 10,000 to 40,000, more preferably 12,000 to 30,000. The polymethylenedicarboxylic acid may be used in an amount of 1 to 25 mol% based on the total amount of the dihydric phenol in the component A.

The component A may further contain, in addition to the PC-PMDC copolymer and the by-produced polycarbonate resins, another polycarbonate resin (additive polycarbonate resin). The additive polycarbonate resin preferably has a viscosity-average molecular weight of 10,000 to 40,000, more preferably 12,000 to 30,000.

The additive polycarbonate resin is not particularly restricted, and usable are aromatic polycarbonates, aromatic polycarbonate copolymers and mixtures of various polycarbonates. The aromatic polycarbonates are preferably polymers produced by reacting a dihydric phenol with a carbonate precursor by solution polymerization method or melt polymerization method, more preferably those produced by the reaction between a dihydric phenol and phosgene or the transesterification between a dihydric phenol and diphenyl carbonate, etc.

Examples of the dihydric phenol are 2,2-bis(4-hydroxyphenyl)propane (bisphenol A), bis(4-hydroxyphenyl) methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ether, and bis(4-hydroxyphenyl)ketone. In addition, resorcinol and catechol are usable. Of these dihydric phenols, preferred are bis(hydroxyphenyl)alkanes, and more preferred are those having a bisphenol A structure. These dihydric phenols may be used alone or in combination of two or more.

The carbonate precursors are carbonyl halides, carbonyl esters or haloformates. Specific examples of the carbonate precursors include phosgene, dihaloformates of dihydric phenol, diphenylcarbonate, dimethylcarbonate and diethylcarbonate.

The polycarbonate resins may have a branched structure. Examples of the branching agent include 1,1,1-tris (4-hydroxyphenyl)ethane, α, α', α"-tris(4-hydroxyphenyl)-1,3,5-trisisopropylbenzene, phloroglucinol, trimellitic acid and isatin bis(o-cresol). Also, the molecular weight of the polycarbonate resin may be controlled by a molecular weight modifier such as phenol, p-t-butylphenol, p-t-octylphenol, p-cumylphenol, p-decylphenol, p-dodecylphenol and p-pentadecylphenol.

Examples of the aromatic polycarbonate copolymers include aromatic polyester-polycarbonate copolymers, aromatic polycarbonate-polyorganosiloxane copolymers (hereinafter occasionally referred to merely as "PC-POS copolymer"), etc. The aromatic polyester-polycarbonate copolymers are produced by polymerizing polycarbonate in the presence of an ester precursor such as a bifunctional aromatic dicarboxylic acid such as terephthalic acid or an ester-forming derivatives thereof.

The PC-POS copolymer comprises a polycarbonate segment and a polyorganosiloxane segment, and may be produced by dissolving a polycarbonate oligomer and polyorganosiloxane having a reactive end group such as polydimethylsiloxane, polydiethylsiloxane and polymethylphenylsiloxane in a solvent such as methylene chloride, adding an aqueous sodium hydroxide solution containing bisphenol A to the resultant solution, and subjecting the mixture to interfacial polycondensation in the presence of a catalyst such as triethylamine (Japanese Patent Application Laid-Open Nos. 3-292359, 4-202465, 8-81620, 8-302178 and 10-7897).

The PC-POS copolymer preferably comprises a polycarbonate segment having a polymerization degree of about 3 to 100 and a polyorganosiloxane segment having a polymerization degree of about 2 to 500. Also, the PC-POS copolymer contains the polyorganosiloxane segment in an amount of usually 0.2 to 30% by mass, preferably 0.5 to 20% by mass. The additive polycarbonate resin has a viscosity-average molecular weight of preferably 10,000 to 100,000, more preferably 11,000 to 30,000, most preferably 12,000 to 30,000.

In the present invention, the viscosity-average molecular weights (Mv) of the PC-PMDC copolymer, the by-produced polycarbonate resin and the additive polycarbonate resin in the component A were determined as follows. First, the viscosity of a methylene chloride solution of the respective resins was measured at 25°C using Ubbellohde

viscometer to determine an intrinsic viscosity [η] from the measured results. Then, the viscosity-average molecular weight (Mv) was calculated from the following formula:

$$[\eta] = 1.23 \times 10^{-5} Mv^{0.83}$$

The viscosity-average molecular weight of the component A as a whole is preferably 10,000 to 40,000, more preferably 12,000 to 30,000, most preferably 14,000 to 26,000. When the molecular weight is too low, the polycarbonate resin composition tends to be deteriorated in mechanical strength, especially impact resistance. When the molecular weight is too high, the polycarbonate resin composition tends to be deteriorated in moldability.

In view of attaining a good flame retardancy of the polycarbonate resin composition, when using the PC-PDMS copolymer, the polyorganosiloxane content is preferably 0.1 to 10% by mass based on the total weight of the component A. The content is more preferably 0.2 to 5% by mass, most preferably 0.3 to 3% by mass.

The amount of the polymethylenedicarboxylic acid used is preferably 1 to 15 mol%, more preferably 1 to 12 mol%, most preferably 2 to 10 mol% based on the total amount of the main monomer (dihydric phenol) in the component A. When the amount of the polymethylenedicarboxylic acid is too small, the polycarbonate resin composition tends to fail to show an improved fluidity. When too large, the polycarbonate resin composition tends to be deteriorated in heat resistance.

COMPONENT B: Functionalized Silicone Compound

The functionalized silicone compound is preferably a (poly)organosiloxane having a basic structure represented by the following formula:

$$R^5{}_eR^6{}_fSiO_{(4-e-f)/2}$$

wherein $R^5$ is a functional group; $R^6$ is $C_1$-$C_{12}$ hydrocarbon group; and e and f are numbers satisfying the following expressions:

$$0 < e \leq 3,$$

$$0 \leq f < 3,$$

and

$$0<e+f\leq3.$$

Examples of the functional group include alkoxy, aryloxy, polyoxyalkylene, hydrogen, hydroxyl, carboxyl, cyanol, amino, mercapto and epoxy.

The functionalized silicone compound may have a plurality of functional groups which may be the same or different from each other. Also, in the present invention, a mixture of two or more different silicone compounds having different functional groups may be used as the component B. In the functionalized silicone compounds, the molar ratio of the functional group $R^5$ to the hydrocarbon group $R^6$ is usually about 0.1 to 3, preferably about 0.3 to 2.

The functionalized silicone compound may be liquid or powder, and preferably shows a good dispersibility upon melt-kneading. The preferred functionalized silicone compounds include, for example, a liquid silicone compound showing a kinematic viscosity of about 10 to 500,000 $mm^2/s$ at room temperature. In the polycarbonate resin composition of the present invention, even though the silicone compound is liquid, the silicone compound can be uniformly dispersed in the composition and less bleeds out during the molding or extrusion operation or to the surface of a shaped article. The use of non-functionalized silicone compound fails to improve the flame retardancy of the polycarbonate resin composition.

The first polycarbonate resin composition contains the functionalized silicone compound in an amount of 0.1 to 10 parts by mass, preferably 0.2 to 5 parts by mass based on 100 parts by mass of the component A. When the PC-POS copolymer is used, the content of the functionalized silicone compound is appropriately determined in consideration of the total amount of silicones in the composition. Specifically, since the silicones from the PC-POS copolymer are already present in the composition, the content of the functionalized silicone compound can be reduced correspondingly. Thus, even when the content of the PC-POS copolymer is reduced, the flame retardancy of the composition can be maintained at high level.

COMPONENT C: Core-Shell Type Rubber-Like Graft Elastomer

The core-shell type rubber-like graft elastomer is a powdery or granular rubber-like graft elastomer having a two-layer structure of a soft rubber-like core and a hard resinous shell. A large portion of the core-shell type rubber-like graft elastomer maintains its original powdery or granular shape even after melt-blended with the polycarbonate resin, and therefore, uniformly dispersed in the composition without causing surface-peeling.

Various core-shell type rubber-like graft elastomers may be used as the component C. Commercially available are Hiblen B621 available from Nippon Zeon Co., Ltd., KM-330 available from Rohm & Haas Company, and Metablen W529, Metablen S2001, and Metablen C223 all available from Mitsubishi Rayon Co., Ltd.

Of the above, preferred are, for example, those produced by polymerizing at least one vinyl monomer in the presence of a rubber-like polymer obtained from a monomer mixture mainly composed of alkyl acrylate or alkyl methacrylate, and dimethylsiloxane. Example of suitable alkyl acrylates or alkyl methacrylates are those having $C_2$-$C_{10}$ alkyl.

Specific examples include ethyl acrylate, butyl acrylate, 2-ethylhexyl acrylate and n-octyl methacrylate. The rubber-like elastomers obtained from the monomer component mainly composed of alkyl acrylate or the like may be produced by reacting 70% by mass or more of alkyl acrylate with 30% by mass or less of another vinyl monomer copolymerizable with the alkyl acrylate, such as methyl methacrylate, acrylonitrile, vinyl acetate and styrene. In the polymerization, a polyfunctional monomer such as divinylbenzene, ethylene dimethacrylate, triallyl cyanurate and triallyl isocyanurate may be added as a cross-linking agent.

Examples of the vinyl monomer to be polymerized in the presence of the rubber-like polymer include aromatic vinyl compounds such as styrene and α-methylstyrene; acrylic esters such as methyl acrylate and ethyl acrylate; and methacrylic esters such as methyl methacrylate and ethyl methacrylate. These vinyl monomers may be used alone or in combination of two or more. Also, the vinyl monomer may be copolymerized with another vinyl monomer, e.g., a vinyl cyanide compound such as acrylonitrile and methacrylonitrile; or a vinyl ester compound such as vinyl acetate and vinyl propionate. The polymerization may be conducted by various methods such as bulk polymerization, suspension polymerization and emulsion polymerization with the emulsion polymerization being particularly preferred.

The thus obtained core-shell type rubber-like graft elastomer preferably contains the rubber-like polymer in an amount of 20% by mass or higher. Specific examples of such a core-shell type rubber-like graft elastomer include MAS resin elastomers such as graft copolymers produced by reacting 60 to 80% by mass of n-butyl acrylate with styrene or methyl methacrylate. Particularly preferred are composite rubber graft copolymers produced by grafting at least one vinyl monomer to a composite rubber having an average particle size of about 0.01 to 1 μm and comprising 5 to 95% by mass of a polysiloxane rubber component and 95 to 5% by mass of a poly(alkyl (meth)acrylate) rubber component which are unseparably entangled with each other. The composite rubber-like graft copolymer exhibits a high improving effect of the impact resistance as compared with the graft copolymer having only one of the polysiloxane rubber component and the poly(alkyl (meth)acrylate) rubber component. As the composite rubber graft copolymer, there may be exemplified Metablen S-2001 available from Mitsubishi Rayon Co., Ltd.

The content of the core-shell type rubber-like graft elastomer is 0.2 to 10 parts by mass, preferably 0.5 to 5 parts by mass based on 100 parts by mass of the component A. When the content is less than 0.2 part by mass, the composition is less improved in the impact resistance. When more than 10 part by mass, the flame retardancy, heat resistance and stiffness are likely to be lowered. Therefore, the use of up to 10 parts by mass is usually sufficient. The polycarbonate resin composition of the present invention exhibits excellent effect when the functionalized silicone compound as the component B and the core-shell type rubber-like graft copolymer as the component C are combinedly used in small amounts. When another graft copolymer is used in place of the core-shell type rubber-like graft copolymer, although the impact resistance is improved in some cases, the flame retardancy cannot be maintained at high level, thereby failing to attain a main object of the present inventions.

COMPONENT D: Polyfluoroolefin Resin

The object to improve the flame retardancy and the impact resistance can be fully attained by the polycarbonate resin composition containing the above three components A to C. However, the first polycarbonate resin composition may further contains a known anti-dripping agent for preventing the melt-dripping of the composition, for example, during the burning test. As the anti-dripping agent, there may be suitably used a polyfluoroolefin resin. The polyfluoroolefin resin is a polymer or copolymer containing fluoroethylene units. Examples of the polyfluoroolefin resin include difluoroethylene polymer, tetrafluoroethylene polymer, tetrafluoroethylene-hexafluoropropylene copolymer, and copolymer of tetrafluoroethylene and fluorine-free ethylenic monomer with polytetrafluoroethylene (PTFE) having

an average molecular weight of preferably 500,000 or higher, more preferably 500,000 to 10,000,000 being preferred. All of conventionally known polytetrafluoroethylenes may be used in the present invention.

Still higher anti-dripping properties can be attained by a fibrillatable polytetrafluoroethylene. Examples of the fibrillatable polytetrafluoroethylene (PTFE) include, not particularly limited to, those classified into Type 3 of ASTM standard, specifically, Teflon 6-J available from Mitsui-Du Pont Fluorochemicals Co., Ltd., Polyflon D-1, Polyflon F-103 and Polyflon F-201 available from Daikin Industries, Ltd., and CD076 available from Asahi-ICI Fluoropolymers Co., Ltd.

Examples of the polytetrafluoroethylene other than those classified into Type 3 include Argoflon F5 available from Montefluos Co., Ltd., and Polyflon MPA and Polyflon FA-100 available from Daikin Industries, Ltd. These polytetrafluoroethylenes (PTFE) may be used alone or in combination of two or more. The fibrillatable polytetrafluoroethylene is produced, for example, by polymerizing tetrafluororethylene at 0 to 200°C, preferably 20 to 100°C under 0.01 to 1 MPa in an aqueous solvent in the presence of sodium, potassium or ammonium peroxydisulfide.

The content of the polyfluoroolefin resin in the composition is 0.02 to 5 parts by mass, preferably 0.05 to 2 parts by mass based on 100 parts by mass of the component A. When less than 0.02 part by mass, the composition fails to show a sufficient anti-dripping property upon combustion. When more than 5 parts by mass, no additional improvement is attained and the impact resistance and the appearance of the shaped article tend to be adversely affected. Therefore, the content of the polyfluoroolefin resin may be appropriately determined depending upon required degree of flame retardancy, e.g., V-0, V-1 or V-2 of UL-94, and contents of the other components.

COMPONENT E: Inorganic Filler

The first polycarbonate resin composition may further contain an inorganic filler, if required, to further improve stiffness and flame retardancy of the shaped article. Examples of the inorganic filler include talc, mica, kaolin, diatomaceous earth, calcium carbonate, calcium sulfate, barium sulfate, glass fibers, carbon fibers and potassium titanate fibers. Of these inorganic fillers, preferred are plate-like inorganic fillers such as talc and mica, and fibrous inorganic fillers such as glass fibers and carbon fibers. Talc is a hydrous magnesium silicate and any commercially available talc may be used in the present invention. The inorganic filler has an average particle size of 0.1 to 50 μm, preferably 0.2 to 20 μm. By incorporating the inorganic filler, particularly talc, the stiffness is improved and in some cases the use amount of the functionalized silicone compound can be reduced.

The content of the inorganic filler in the composition is 1 to 100 parts by mass, preferably 2 to 50 parts by mass based on 100 parts by mass of the component A. When less than 1 part by mass, the intended improvement in the stiffness and the flame retardancy is not obtained sufficiently. When more than 100 parts by mass, the impact resistance and the melt fluidity may be lowered in some cases. The content of the inorganic filler may be appropriately determined in view of required properties of shaped article and the moldability/extrudability of the composition, e. g., thickness of shaped article and resin flow length.

COMPOSITION F: Additives

In addition to the essential components A, B and C and the optional components D and E, the first polycarbonate resin composition of the present invention may further contain, if required, a thermoplastic resin such as polyester resin and polyamide resin and an additive ordinarily used for the thermoplastic resins to improve the moldability/extrudability, the impact resistance, the appearance, the weather resistance, the stiffness, etc. Examples of the additive include phenol-based, phosphorus-based or sulfur-based antioxidant, antistatic agent, polyamide-polyether block copolymer (permanent antistatic agent), benzotriazole-based or benzophenone-based ultraviolet absorber, hindered amine-based light stabilizer (weatherproof agent), plasticizer, biocide, compatibilizer, colorant (dye and pigment), etc. These optional components may be added in such an amount as not to adversely affect the properties of the polycarbonate resin composition according to the present invention.

Production of First Polycarbonate Resin Composition

The first polycarbonate resin composition is produced by blending and kneading the components A to C and the optional components D to F in a predetermined mixing ratio. The blending and kneading may be performed using a mixing apparatus ordinarily used for the production of resin compositions. For example, after pre-blending in a ribbon blender or a drum blender, the kneading is effected in a Banbury mixer, a single-screw extruder, a twin-screw extruder, a multi-screw extruder or a co-kneader. The kneading may be effected at 240 to 300°C. The melt-kneading and the subsequent extrusion may be suitably conducted using an extrusion machine, especially a vented extrusion machine. The components other than the polycarbonate resin may be preliminarily melt-kneaded with a polycarbonate resin or another thermoplastic resin to prepare a master batch which is then mixed with the polycarbonate resin component.

Molding and Extrusion of First Polycarbonate Resin Composition

The first polycarbonate resin composition may be directly extruded into the final product using the above melt-kneading machine. Alternatively, the resin composition may be first pelletized and then formed into shaped articles by injection molding, injection compression molding, extrusion, blow molding, press molding, vacuum molding or foam molding. The first polycarbonate resin composition is preferably used in the production of injection-molded articles where the composition is pelletized by the melt-kneading method and then injection-molded or injection compression-molded into a shaped article. To avoid sink marks on the surface or to reduce the weight of shaped articles, a gas injection molding may be employed.

The shaped articles of the first polycarbonate resin composition include housings or parts for copying machine, facsimile, TV, radio, tape recorder, video recorder, personal computer, printer, telephone, information terminal device, refrigerator, electric oven, etc., and shaped articles for other application field such as automobile parts.

2. Second Polycarbonate Resin Composition

The second polycarbonate resin composition comprises 100 parts by mass of a resin mixture comprising (A') 1 to 99% by mass of a copolyester carbonate having an aliphatic segment or a polycarbonate resin mixture containing the copolyester carbonate and (B') 99 to 1% by mass of a styrene resin; and (C') 0.01 to 5 parts by mass of a polyfluoroolefin resin.

Component A': Copolyester Carbonate or Polycarbonate Resin Mixture

The copolyester carbonate used as the component A' of the second polycarbonate resin composition is the same as that used as the component A of the first polycarbonate resin composition.

The component A' may be constituted by the copolyester carbonate (PC-PMDC copolymer alone) or a mixture of the copolyester carbonate and the aromatic polycarbonate resins by-produced in the production of the copolyester carbonate. Further, the component A' may also contain a polycarbonate resin other than PC-PMDC copolymer and the by-produced aromatic polycarbonate resins. The polycarbonate resin optionally contained in the component A' may be the same as the additive polycarbonate resin contained in the component A of the first polycarbonate resin composition.

COMPONENT B': Styrene Resin

The styrene resin as the component B' of the second polycarbonate resin composition is a polymer produced by polymerizing a monomer or monomer mixture comprising 20 to 100% by mass of an aromatic monovinyl monomer such as styrene and $\alpha$-styrene, 0 to 60% by mass of a vinyl cyanide monomer such as acrylonitrile and methacrylonitrile, and 0 to 50% by mass of another vinyl monomer copolymerizable with the above monomers such as maleimide and methyl (meth)acrylate. If the optional monomer or monomers are used, the amount ratio is preferably 5 to 60% by mass for the vinyl cyanide monomer, and 5 to 50% by mass for another vinyl monomer. Examples of the styrene resin include polystyrene (general-purpose polystyrene) and an acrylonitrile-styrene copolymer (AS resin).

The styrene resin is preferably a rubber-modified styrene resin, more preferably an impact-resistant rubber-modified styrene resin prepared by graft-polymerizing at least a styrene monomer to a rubber. Examples of the rubber-modified styrene resin include impact-resistant polystyrene (HIPS) prepared by polymerizing styrene with a rubber such as polybutadiene, ABS resin prepared by polymerizing acrylonitrile and styrene with polybutadiene, and MBS resin prepared by polymerizing methyl methacrylate and styrene with polybutadiene. These rubber-modified styrene resins may be used in combination of two or more, or in the form of a mixture with the rubber-unmodified styrene resin described above.

The rubber content of the rubber-modified styrene resin is preferably 2 to 50% by mass, more preferably 5 to 30% by mass, most preferably 5 to 15% by mass. When the rubber content is less than 2% by mass, the impact resistance becomes insufficient. When the rubber content is more than 50% by mass, the problems such as reduction of the heat stability, lowering of the melt fluidity, gel formation and coloration are likely to arise.

Examples of the rubber include polybutadiene, rubber-like polymers containing acrylate and/or methacrylate, styrene-butadiene-styrene rubber (SBS), styrene-butadiene rubber (SBR), butadiene-acrylic rubber, isoprene rubber, isoprene-styrene rubber, isoprene-acrylic rubber and ethylenepropylene rubber. Of these rubbers, particularly preferred is polybutadiene. The polybutadiene may be a low-cis polybutadiene, e.g., polybutadiene containing 1 to 30 mol% of 1,2-vinyl bonding and 30 to 42 mol% of 1,4-cis bonding, a high-cis polybutadiene, e.g., polybutadiene containing 20 mol% or less of 1,2-vinyl bonding and 78 mol% or more of 1,4 cis bonding, or a mixture thereof.

The second polycarbonate resin composition is improved in the melt fluidity by blending the polycarbonate

resin (component A') with the styrene resin (component B'). The blending ratio (component A'/component B') by mass percent is 1-99%/99-1%, preferably 50-98%/50-2%, more preferably 70-95%/30-5%, wherein the combined masses of the components A' and B' total 100 mass percent. When the content of the polycarbonate resin as the component A' is less than 1% by mass, the heat resistance and strength are insufficient. When the content of the styrene resin as the component B' is less than 1% by mass, a sufficient improvement in the moldability cannot be obtained. When the rubber-modified styrene resin is used as the component B', the blending ratio of polycarbonate resin/rubber-modified styrene resin (component A'/component B') by mass percent is preferably 70-98%/30-2%.

The blending ratio of the component A' to the component B' is suitably selected from the above range according to molecular weight of the polycarbonate resin, kind and molecular weight of the styrene resin, melt flow rate, rubber content, application, size and thickness of shaped article, etc.

COMPONENT C': Polyfluoroolefin Resin

The second polycarbonate resin composition contains a polyfluoroolefin resin to improve the flame retardancy and prevent the melt-dripping upon combustion, e.g., during burning test. The polymers and copolymers as those described with respect to the component D of the first polycarbonate resin composition are used as the polyfluoroolefin resin for the second polycarbonate resin composition.

The content of the polyfluoroolefin resin is 0.01 to 5 parts by mass, preferably 0.05 to 2 parts by mass based on 100 parts by mass of the resin mixture of the components A' and B'. When the content of the polyfluoroolefin resin is less than 0.01 part by mass, the anti-dripping property is insufficient even when the flame retardancy is improved in a desired degree. A content more than 5 parts by mass is likely to adversely affect the impact resistance and the appearance of shaped articles, though produces no additional effect. Therefore, the content of the polyfluoroolefin resin may be appropriately determined depending upon required degree of flame retardancy, e.g., V-0, V-1 or V-2 of UL-94, and contents of the other components.

COMPONENT D': Functionalized Silicone Compound

To further improve the flame retardancy, the second polycarbonate resin composition may optionally contain the same functionalized silicone compound as those for the component B of the first polycarbonate resin composition.

The content of the functionalized silicone compound is 0.1 to 10 parts by mass, preferably 0.2 to 5 parts by mass based on 100 parts by mass of the resin mixture of the components A' and B'. When the content is less than 0.1 part by mass, the improvement of the flame retardancy is insufficient. When the content is more than 10 parts by mass, no additional improvement cannot be obtained. When the PC-POS copolymer is used, the content of the functionalized silicone compound is appropriately determined in consideration of the total amount of silicones in the composition. Specifically, since the silicones from the PC-POS copolymer are already present in the composition, the content of the functionalized silicone compound can be reduced correspondingly. Thus, even when the content of the PC-POS copolymer is reduced, the flame retardancy of the composition can be maintained at high level.

COMPONENT E': Inorganic Filler

To improve stiffness, etc., the second polycarbonate resin composition may optionally contain the same inorganic filler as those for the component E of the first polycarbonate resin composition.

The content of the inorganic filler is 1 to 100 parts by mass, preferably 2 to 50 parts by mass based on 100 parts by mass of the resin mixture of the components A' and B'. When less than 1 part by mass, the intended improvement in the stiffness and the flame retardancy is not obtained sufficiently. When more than 100 parts by mass, the impact resistance and the melt fluidity may be lowered in some cases. The content of the inorganic filler may be appropriately determined in view of required properties of shaped article and the moldability/extrudability of the composition, e. g., thickness of shaped article and resin flow length.

COMPONENT F': Additives

To improve the moldability/extrudability, impact resistance, appearance, weather resistance, stiffness, etc., the second polycarbonate resin composition may further contain the same additives as those for the component F of the first polycarbonate resin composition.

Production of Second Polycarbonate Resin Composition

The second polycarbonate resin composition is produced by blending and kneading the components A' to C'

and the optional components D' to F' in a predetermined mixing ratio. The blending and kneading may be performed in the same manner as in the first polycarbonate resin composition.

Molding and Extrusion of Second Polycarbonate Resin Composition

The second polycarbonate resin composition may be formed into various shaped articles in the same manner as in the first polycarbonate resin composition.
Like the first polycarbonate resin composition, the shaped articles of the second polycarbonate resin composition is used as housings or parts for electric and electronic devices as well as parts for other application fields such as automobile parts.
The present invention will be described in more detail by reference to the following examples. However, it should be noted that the following examples are illustrative and not intended to limit the present invention thereto.

PRODUCTION EXAMPLE 1: Production of PC Oligomer

Into 400 L of a 5% sodium hydroxide aqueous solution, was dissolved 60 kg of bisphenol A to prepare an aqueous sodium hydroxide solution of bisphenol A.
Then, at room temperature, the aqueous sodium hydroxide solution of bisphenol A and methylene chloride were respectively introduced at flow rates of 138 L/hr and 69 L/hr into a tubular reactor of 10 mm inner diameter and 10 m length through an orifice plate. Simultaneously, phosgene was blown into the reactor at a flow rate of 10.7 kg/hr to continue the reaction for 3 hours. The tubular reactor used was of a double structure type having a jacket through which cooling water was passed to maintain the reaction solution being discharged at 25°C. The reaction solution being discharged was adjusted to pH 10 to 11.
The reaction solution was allowed to stand for phase separation. By removing the water phase, was obtained 220 L of the methylene chloride phase containing a PC oligomer at a concentration of 317 g/L. The polymerization degree of the PC oligomer was 2 to 4 and the concentration of chloroformate group was 0.7N.

PRODUCTION EXAMPLE 2: Production of PC-PMDC Copolymer I

After adding an aqueous sodium hydroxide solution of decanedicarboxylic acid (317 g of decanedicarboxylic acid and 110 g of sodium hydroxide in 2 L of water) and 5.8 ml of triethylamine to 10 L of the PC oligomer obtained in Production Example 1, the reaction was carried out at room temperature for one hour while stirring at 300 rpm. After adding a sodium hydroxide solution of bisphenol A (534 g of bisphenol A and 312 g of sodium hydroxide in 5 L of water) and 136 g of p-cumylphenol, and further 8 L of methylene chloride to the resultant reaction solution, the reaction was continued for one hour while stirring at 500 rpm. After completion of the reaction, the reaction solution was mixed with 7 L of methylene chloride and 5 L of water, and the stirring was further continued for 10 min at 500 rpm. After stirring, the resultant reaction solution was allowed to stand for phase separation into organic phase and water phase. The organic phase was alkali-washed with 5 L of 0.03 N NaOH, acid-washed with 5 L of 0.2 N HCl, and then washed with two portions of 5 L of water. Thereafter, methylene chloride was removed to obtain flake-like polymer. The viscosity-average molecular weight was 17,000, and the decanedicarboxylic acid content was 5.2 mol% based on the total monomer.

PRODUCTION EXAMPLE 3: Production of Reactive PDMS

A mixture of 1,483 g of octamethylcyclotetrasiloxane, 96 g of 1,1,3,3-tetramethyldisiloxane and 35 g of 86% sulfuric acid was stirred at room temperature for 17 hours. After removing the oil phase, 25 g of sodium hydrogen carbonate was added. The mixture was stirred for one hour, filtered and then vacuum-distilled at 150°C under 3 Torr ($4 \times 10^2$ Pa) to remove low-boiling substances, thereby obtaining an oil.
A mixture of 60 g of 2-allylphenol and 0.0014 g of platinum chloride-alcoholate complex was mixed with 294 g of the oil at 90°C. The resultant mixture was stirred at 90 to 115°C for 3 hours. The obtained reaction product was extracted with methylene chloride, and the extract was washed with 80% aqueous methanol three times to remove the excess of 2-allylphenol. The washed product was dried over anhydrous sodium sulfate, and heated in vacuum at 115°C to remove the solvent. The NMR measurement of the phenol-terminated PDMS thus obtained showed that the number of dimethylsilanoxy repeating units was 30.

PRODUCTION EXAMPLE 4: Production of PC-PDMS Copolymer

A solution of 182 g of the reactive PDMS obtained in Production Example 3 in 2 L of methylene chloride was

added with 10 L of the PC oligomer obtained in Production Example 1. After adding a solution of 26 g of sodium hydroxide in 1 L of water and 5.7 cc of triethylamine to the mixture, the reaction was carried out at room temperature for one hour under stirring at 500 rpm.

Thereafter, the reaction solution was mixed with a solution of 600 g of bisphenol in 5 L of a 5.2% sodium hydroxide aqueous solution, 8 L of methylene chloride and 96 g of p-t-butylphenol, and the reaction was continued at room temperature for 2 hours while stirring at 500 rpm.

After completion of the reaction, the reaction solution was mixed with 5 L of methylene chloride, washed with 5 L of water, alkali-washed with 5 L of 0.03 N sodium hydroxide aqueous solution, acid-washed with 5 L of 0.2 N hydrochloric acid, and further washed with two portions of 5 L water. Finally, methylene chloride was removed to obtain flake-like PC-PDMS copolymer. The PC-PDMS copolymer thus obtained was vacuum-dried at 120°C for 24 hours. The viscosity-average molecular weight was 17,000, and the PDMS content was 4.0% by mass.

The viscosity-average molecular weight and the PDMS content were measured by the following methods.

(1) Viscosity-average molecular weight (Mv)

The viscosity of a resin solution in methylene chloride was measured at 20°C using Ubbellohde viscometer. From the results, the intrinsic viscosity [η] was determined. The viscosity-average molecular weight (Mv) was calculated from the following formula:

$$[\eta] = 1.23 \times 10^{-5} Mv^{0.83}$$

(2) PDMS content

The PDMS content was determined from the intensity ratio of $^1$H-NMR peak at 1.7 ppm assigned to methyl of isopropyl of bisphenol A and $^1$H-NMR peak at 0.2 ppm assigned to methyl of dimethylsiloxane.

EXAMPLES 1 to 6 and COMPARATIVE EXAMPLES 1 to 6

The respective components were blended in the blending ratio shown in Table 1 (component A: % by mass; other components: part by mass based on 100 parts by mass of the component A). The resultant blend was fed into a vented twin-screw extruder (TEM35 available from Toshiba Kikai Co., Ltd.), melt-kneaded at 280°C, and extruded into pellets. In all the examples and comparative examples, 0.2 part by mass of Irganox 1076 (Ciba Speciality Chemicals Co., Ltd.) and 0.1 part by mass of Adekastab C (Asahi Denka Kogyo Co., Ltd.) were blended as antioxidants. The resultant pellets were dried at 120°C for 12 hours, and then injection-molded into a test piece at a molding temperature of 270°C and a mold temperature of 80°C. The test piece was subjected to various tests to evaluate the properties. The results are shown in Table 1.

The components used in the respective compositions and methods for evaluating properties are shown below.

(A) Polycarbonate Resin

| | |
|---|---|
| PC-1: | Toughlon A1700 (Idemitsu Petrochemical Co., Ltd.)<br>Bisphenol A polycarbonate resin<br>Melt flow rate (MFR): 27 g/10 min (JIS K7210; 300°C and 11.77 N load)<br>Viscosity-average molecular weight: 17,000 |
| PC-2: | Toughlon A1500 (Idemitsu Petrochemical Co., Ltd.)<br>Bisphenol A polycarbonate resin<br>MFR: 50 g/10 min<br>Viscosity-average molecular weight: 15,000 |
| PC-PMDC I: | Copolyester carbonate resin having an aliphatic segments prepared in Production Example 2. |
| PC-PMDC II: | Lexan SP1010 (General Electric Company) Copolymer: decanedicarboxylic acid<br>End modifier: p-cumylphenol<br>Viscosity-average molecular weight: 18,800<br>Decanedicarboxylic acid content based on total monomers: 8.2 mol% |
| PC-PMDS: | Bisphenol A-polydimethylsiloxane (PDMS) copolymer prepared in Production Example 4. |

(B) Silicone Compound

Silicone-1: Vinyl- and methoxy-containing methylphenylsilicone
KR-219 (Shin-Etsu Chemical Co., Ltd.)
Kinematic viscosity: 18 $mm^2/s$
Silicone-2: Methoxy-containing dimethylsilicone
KC-89 (Shin-Etsu Chemical Co., Ltd.)
Kinematic viscosity: 20 $mm^2/s$
Silicone-3: Dimethylsilicone;
SH200 (Shin-Etsu Chemical Co., Ltd.)
Kinematic viscosity: 350 $mm^2/s$

(C) Core-Shell Type Rubber-like Graft Elastomer

Rubber-like elastomer-1: Composite rubber-based graft copolymer
Metablen S2001 (Mitsubishi Rayon Co., Ltd.)
Rubber-like elastomer-2: MBS-based graft copolymer
Metablen C223 (Mitsubishi Rayon Co., Ltd.)
Polybutadiene content: 60% by mass or more
Rubber-like elastomer-3: SBS-based graft copolymer (comparative)
Vector 8550-5 (Dexco Polymers Co., Ltd.)

(D) Polyfluoroolefin Resin

PTFE: CD 076 (Asahi-ICI Fluoropolymers Co., Ltd.)

Evaluation Methods

(1) Melt Fluidity

Melt flow rate (MFR): measured according to JIS K 7210
Temperature: 300°C
Load: 11.77 N

(2) Izod Impact Strength

Measured at 23°C according to ASTM D256
Thickness: 3.2 mm

(3) Flame Retardancy

Measured according to UL94 burning test (Underwriters' Laboratories, Inc. Bulletin UL-94, Burning Test for Classifying Materials)
Thickness of test piece: 1.5 mm

A test piece which did not fall under any of the ratings, V-0, V-1 and V-2, was classified as "V-2NG."

(4) Grease Resistance

Evaluated by a test method for chemical resistance (limiting distortion on 1/4 ellipse).

As shown in Fig. 1 (perspective view), a test piece of 3 mm thick was fixed on the curved surface of 1/4 ellipse. After applying Albania grease (Showa Shell Sekiyu Co., Ltd.), the test piece was allowed to stand for 48 hours. A minimum length (X) at which cracks were first generated was measured, and the limiting distortion (%) was calculated from the following equation:

$$\text{Limiting distortion (\%)} = \frac{b}{2a^2}\left[1-\left(\frac{1}{a^2}-\frac{b^2}{a^4}\right)X^2\right]^{-3/2} \times t \times 100$$

wherein t is the thickness of the test piece; and a, b and X are dimensions as shown in Fig. 1.

(5) Recyclability

The pellets formed of the respective compositions were injection molded into a housing for notebook-type personal computer (A4 size) at a molding temperature of 300°C and a mold temperature of 80°C. The molded housing was crushed to prepare a 100% recycling material. The recycling material was injection-molded again under the same conditions as above to prepare a test piece, which was tested on Izod impact strength and color change.

Izod Impact Strength: Measured by the same method as above.

Color Change: Tested according to JIS H7103 (yellowing test) to measure the hue (L, a, b) of the test piece before and after recycling by a color difference meter, and calculated the change in hue (ΔE).

Table 1

| | Ex. 1 | Ex. 2 | Ex. 3 | Com. Ex. 1 |
|---|---|---|---|---|
| Composition | | | | |
| Component A (% by mass) | | | | |
| PC-1 (A1700) | - | - | - | - |
| PC-2 (A1500) | - | - | - | - |
| PC-PMDC copolymer I | 100 | 100 | - | 100 |
| PC-PDMS copolymer II | - | - | 100 | - |
| PC-PDMS | - | - | - | - |
| PDMS content in component A (% by mass) | 0 | 0 | 0 | 0 |
| Component B (% by mass) | | | | |
| silicone 1 | 3 | 3 | 3 | - |
| silicone 2 | - | - | - | - |
| silicone 3 (comparative) | - | - | - | - |
| Component C (part by mass) | | | | |
| rubber-like elastomer 1 | 1 | 1 | 1 | 1 |
| rubber-like elastomer 2 | - | - | - | - |
| rubber-like elastomer 3 (comparative) | - | - | - | - |
| Component D (part by mass) | | | | |
| PTFE | - | 0.5 | 0.5 | 0.5 |
| Evaluation Results | | | | |
| MFR (g/10 min) | 35 | 35 | 40 | 35 |
| Izod impact strength ($kJ/m^2$) | 65 | 65 | 60 | 65 |
| Flame retardancy (UL-94) 1.5 mm thickness | V-2 | V-0 | V-0 | V-2NG |
| Grease resistance (%) | 1.0 | 1.0 | 1.0 | 1.0 |
| Recyclability | | | | |
| Izod impact strength ($kJ/m^2$) | 60 | 60 | 60 | 60 |
| color change (ΔE) | 1.3 | 1.3 | 1.3 | 1.3 |

Table 1 (contd.)

| | Com. Ex. 2 | Com. Ex. 3 | Com. Ex. 4 | Ex. 4 |
|---|---|---|---|---|
| Composition | | | | |
| Component A (% by mass) | | | | |
| PC-1 (A1700) | 100 | 50 | - | - |
| PC-2 (A1500) | - | 50 | - | - |
| PC-PMDC copolymer I | - | - | 100 | - |
| PC-PDMS copolymer II | - | - | - | 75 |
| PC-PDMS | - | - | - | 25 |
| PDMS content in component A (% by mass) | 0 | 0 | 0 | 1 |
| Component B (% by mass) | | | | |

| | | | | |
|---|---|---|---|---|
| silicone 1 | 3 | 3 | – | 1 |
| silicone 2 | – | – | – | – |
| silicone 3 (comparative) | – | – | – | – |
| Component C (part by mass) | | | | |
| rubber-like elastomer 1 | 1 | 1 | – | 2 |
| rubber-like elastomer 2 | – | – | – | – |
| rubber-like elastomer 3 (comparative) | – | – | – | – |
| Component D (part by mass) | | | | |
| PTFE | 0.5 | 0.5 | 0.5 | 0.3 |
| Evaluation Results | | | | |
| MFR (g/10 min) | 28 | 36 | 35 | 42 |
| Izod impact strength (kJ/$m^2$) | 65 | 20 | 25 | 65 |
| Flame retardancy (UL-94) 1.5 mm thickness | V-0 | V-0 | V-0 | V-0 |
| Grease resistance (%) | 0.8 | 0.4 | 1.0 | 0.8 |
| Recyclability | | | | |
| Izod impact strength (kJ/$m^2$) | 65 | 10 | 10 | 60 |
| color change ($\Delta E$) | 1.2 | 1.2 | 1.3 | 1.2 |

Table 1 (contd.)

| | Com. Ex. 5 | Com. Ex. 6 | Ex. 5 | Ex. 6 |
|---|---|---|---|---|
| Composition | | | | |
| Component A (% by mass) | | | | |
| PC-1 (A1700) | – | – | – | 25 |
| PC-2 (A1500) | – | – | – | – |
| PC-PMDC copolymer I | – | – | – | – |
| PC-PDMS copolymer II | 75 | 75 | 50 | 50 |
| PC-PDMS | 25 | 25 | 50 | 25 |
| PDMS content in component A (% by mass) | 1 | 1 | 2 | 1 |
| Component B (% by mass) | | | | |
| silicone 1 | 1 | – | – | 1 |
| silicone 2 | – | – | 0.5 | – |
| silicone 3 (comparative) | – | 1 | – | – |
| Component C (part by mass) | | | | |
| rubber-like elastomer 1 | – | 2 | – | 2 |
| rubber-like elastomer 2 | – | – | 1 | – |
| rubber-like elastomer 3 (comparative) | 2 | – | – | – |
| Component D (part by mass) | | | | |
| PTFE | 0.3 | 0.3 | 0.3 | 0.3 |
| Evaluation Results | | | | |
| MFR (g/10 min) | 40 | 42 | 48 | 40 |
| Izod impact strength (kJ/$m^2$) | 60 | 60 | 55 | 65 |
| Flame retardancy (UL-94) 1.5 mm thickness | V-2NG | V-2NG | V-0 | V-0 |
| Grease resistance (%) | 0.8 | 0.8 | 0.8 | 0.8 |
| Recyclability | | | | |
| Izod impact strength (kJ/$m^2$) | 40 | 60 | 45 | 60 |
| color change ($\Delta E$) | 3.0 | 1.2 | 1.2 | 1.4 |

From Table 1, it would appear that the shaped articles produced from the polycarbonate resin compositions of the present invention was improved in the melt fluidity and exhibited a good flame retardancy with the impact strength maintained high. Also, the shaped articles of the invention are excellent in the grease resistance and recyclability. Further, it can be seen that the molded articles incorporated with PTFE are rated V-0 to show an excellent flame retardancy. The shaped articles of the comparative examples could not satisfy the melt fluidity, impact resistance and flame retardancy simultaneously.

Examples 7 to 14 and Comparative Examples 7 to 11

The respective components shown in Table 2 were blended in the blending ratio shown in Table 2 (components A' and B': % by mass; other components: part by mass based on 100 parts by mass of the components A' and B'). In the same manner as in Examples 1 to 6 and Comparative Examples 1 to 6, each composition thus prepared was molded into a test piece, which was subjected to various tests to evaluate the properties. The results are shown in Table 2.

The components used in the compositions and methods for evaluating properties are shown below.

(A') Polycarbonate Resin

PC-2: Same as above
PC-3: Toughlon A1700 (Idemitsu Petrochemical Co., Ltd.)
Bisphenol A polycarbonate resin
MFR: 19 g/10 min (300°C and 11.77 N load)
Viscosity-average molecular weight: 19,000
Terminated with p-t-butylphenoxy group
PC-PMDC I: Same as above
PC-PMDC II: Same as above
PC-PDMS: Same as above

(B') Styrene Resin

HIPS: High impact resistant polystyrene (HIPS)
Idemitsu PS IT44 (styrene-grafted polybutadiene available from Idemitsu Petrochemical Co., Ltd.)
Rubber content: 10% by mass
MFR: 8 g/10 min (JIS K 7210; 200°C and 49.03 N load)
ABS: Acrylonitrile-butadiene-styrene copolymer (ABS)
DP-611 (Technopolymer Co., Ltd.)
MFR: 2 g/10 min

(C') Polyfluoroolefin Resin

PTFE: Same as above

(D') Silicone Compound

Silicone-1: Same as above
Silicone-2: Same as above
Silicone-3: Same as above

(E') Inorganic Filler

Talc
FFR (Asada Seifun Co., Ltd.)
Average particle size: 0.7 μm
Glass Fiber
03MA419 (Asahi Fiber Glass Co., Ltd.)
Fiber diameter: 13 μm
Fiber length: 3 mm

Evaluation Methods

(1) Melt Fluidity

Same as above

(2) Izod Impact Strength

Same as above

(3) Flexural Modulus

Measured according to JIS K 7202
Span: 60 mm
Test Speed: 2.0 mm/min

(4) Flame Retardancy

Measured in the same manner as above
Thickness of test piece: 1.5 mm and 2.5 mm

(5) Grease Resistance

Same as above

Table 2

| | Ex. 7 | Ex. 8 | Com. Ex. 7 | Com. Ex. 8 |
|---|---|---|---|---|
| Composition | | | | |
| Component A' (% by mass) | | | | |
| PC-3 (A1900) | – | – | 90 | 45 |
| PC-2 (A1500) | – | – | – | 45 |
| PC-PMDC copolymer I | 90 | 90 | – | – |
| PC-PDMS copolymer II | – | – | – | – |
| PC-PDMS | – | – | – | – |
| PDMS content in component A' (% by mass) | 0 | 0 | 0 | 0 |
| Component B' (% by mass) | | | | |
| HIPS | 10 | 10 | 10 | 10 |
| ABS | – | – | – | – |
| Component C' (part by mass) | | | | |
| silicone 1 | 4 | – | 4 | 4 |
| silicone 2 | – | – | – | – |
| silicone 3 (comparative) | – | – | – | – |
| Component D' (part by mass) | | | | |
| PTFE | 0.5 | 0.5 | 0.5 | 0.5 |
| Component E' (part by mass) | | | | |
| talc | – | – | – | – |
| glass fiber | – | – | – | – |
| Evaluation Results | | | | |
| MFR (g/10 min) | 15 | 15 | 8 | 12 |
| Izod impact strength ($kJ/m^2$) | 60 | 65 | 65 | 20 |
| Flexural modulus (MPa) | 2300 | 2300 | 2300 | 2400 |
| Flame retardancy (UL-94) | | | | |
| thickness: 1.5mm | V-2NG | V-2NG | V-2NG | V-2NG |
| thickness: 2.5mm | V-0 | V-2NG | V-0 | V-0 |
| Grease resistance (%) | 1.3 | 1.2 | 1.2 | 0.6 |

Table 2 (contd.)

| | Com. Ex. 9 | Ex. 9 | Ex. 10 | Ex. 11 |
|---|---|---|---|---|
| Composition | | | | |
| Component A' (% by mass) | | | | |
| PC-3 (A1900) | – | – | 30 | – |
| PC-2 (A1500) | – | – | – | – |
| PC-PMDC copolymer I | 90 | – | – | 65 |
| PC-PDMS copolymer II | – | 80 | 60 | – |
| PC-PDMS | – | – | – | 25 |
| PDMS content in component A' (% by mass) | 0 | 0 | 0 | 1 |
| Component B' (% by mass) | | | | |
| HIPS | 10 | – | 10 | 10 |
| ABS | – | 20 | – | – |
| Component C' (part by mass) | | | | |
| silicone 1 | – | 4 | 4 | – |
| silicone 2 | – | – | – | 2 |
| silicone 3 (comparative) | 4 | – | – | – |
| Component D' (part by mass) | | | | |
| PTFE | 0.5 | 0.3 | 0.5 | 0.5 |
| Component E' (part by mass) | | | | |
| talc | – | – | – | – |
| glass fiber | – | – | – | – |
| Evaluation Results | | | | |
| MFR (g/10 min) | 7 | 18 | 14 | 12 |
| Izod impact strength ($kJ/m^2$) | 55 | 65 | 60 | 75 |
| Flexural modulus (MPa) | 2300 | 2400 | 2300 | 2300 |
| Flame retardancy (UL-94) | | | | |
| thickness: 1.5mm | V-2NG | V-2NG | V-2NG | V-2NG |
| thickness: 2.5mm | V-2NG | V-1 | V-0 | V-0 |
| Grease resistance (%) | 1.2 | 1.5 | 1.2 | 1.3 |

Table 2 (contd.)

| | Ex. 12 | Ex. 13 | Ex. 14 | Com. Ex. 10 | Com. Ex. 11 |
|---|---|---|---|---|---|
| Composition | | | | | |
| Component A' (% by mass) | | | | | |
| PC-3 (A1900) | – | – | – | 90 | – |
| PC-2 (A1500) | – | – | – | – | – |
| PC-PMDC copolymer I | 90 | – | – | – | 90 |
| PC-PDMS copolymer II | – | 10 | 30 | – | – |
| PC-PDMS | – | 80 | 50 | – | – |
| PDMS content in component A' (% by mass) | 0 | 3.2 | 2 | 0 | 0 |
| Component B' (% by mass) | | | | | |
| HIPS | 10 | 10 | – | 10 | 10 |
| ABS | – | – | 20 | – | – |
| Component C' (part by mass) | | | | | |

| | | | | | |
|---|---|---|---|---|---|
| silicone 1 | 4 | – | 4 | 4 | – |
| silicone 2 | – | – | – | – | – |
| silicone 3 (comparative) | – | – | – | – | 4 |
| Component D' (part by mass) | | | | | |
| PTFE | 0.5 | 0.5 | 0.3 | 0.5 | 0.5 |
| Component E' (part by mass) | | | | | |
| talc | 10 | 50 | – | 10 | 10 |
| glass fiber | – | – | 40 | – | – |
| Evaluation Results | | | | | |
| MFR (g/10 min) | 13 | 8 | 15 | 6 | 14 |
| Izod impact strength (kJ/$m^2$) | 40 | 55 | 10 | 40 | 40 |
| Flexural modulus (MPa) | 3500 | 3400 | 5200 | 3400 | 3400 |
| Flame retardancy (UL-94) | | | | | |
| thickness: 1.5mm | V-0 | V-0 | V-0 | V-0 | V-2NG |
| thickness: 2.5mm | V-0 5VB | V-0 5VB | V-0 5VB | V-0 5VB | V-2NG |
| Grease resistance (%) | 1.5 | 1.5 | 1.5 | 1.0 | 1.2 |

From Table 1, it would appear that the shaped articles produced from the polycarbonate resin compositions of the present invention was improved in the moldability (melt fluidity) with the impact strength maintained high. Also, the shaped articles of the invention are excellent in the grease resistance. In addition, the flame retardancy is further improved by the incorporation of the functionalized silicone compound. Also, even when the inorganic filler was added to enhance the stiffness (flexural modulus), the high impact strength and moldability can be maintained at high level. Accordingly, the polycarbonate resin composition of the present invention is improved in the moldability and flame retardancy, thereby enabling the production of thin-wall shaped articles.

The polycarbonate resin composition of the present invention is excellent in all the impact resistance, melt fluidity and flame retardancy without using a halogen- or phosphorus-containing flame retardant and with less contents of additives. Further, the shaped articles can be reused because of the excellent recyclability of the composition. These beneficial properties and the good moldability/extrudability enable the production of thin-wall or large-size shaped articles, thereby avoiding environmental problems and contributing to saving of resources. Therefore, the composition of the present invention is expected to find more extensive applications including electric and electronic devices such as OA devices, information devices and domestic electric appliances as well as automobile parts.

## Claims

1. A polycarbonate resin composition comprising:

    (A) 100 parts by mass of a copolyester carbonate having an aliphatic segment or a polycarbonate resin mixture containing the copolyester carbonate;
    (B) 0.1 to 10 parts by mass of a functionalized silicone compound; and
    (C) 0.2 to 10 parts by mass of a core-shell type rubber-like graft elastomer.

2. The polycarbonate resin composition according to claim 1, wherein the copolyester carbonate is a copolymer comprising an aromatic polycarbonate segment having a structural unit represented by Formula 1:

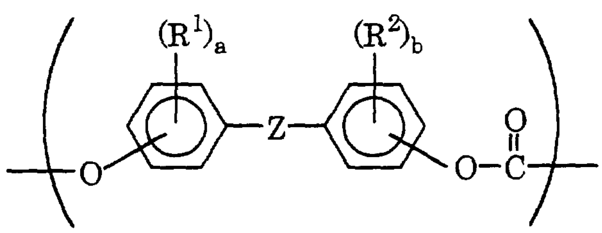

(1)

wherein $R^1$ and $R^2$ are $C_1$-$C_6$ alkyl or phenyl, and may be the same or different; Z is a single bond, $C_1$-$C_{20}$ alkylene, $C_1$-$C_{20}$ alkylidene, $C_5$-$C_{20}$ cycloalkylene, $C_5$-$C_{20}$ cycloalkylidene, $-SO_2-$, -SO-, -S-, -O- or -CO-; and a and b are independently an integer of 0 to 4, and
a polyester segment having a structural unit represented by Formula 2:

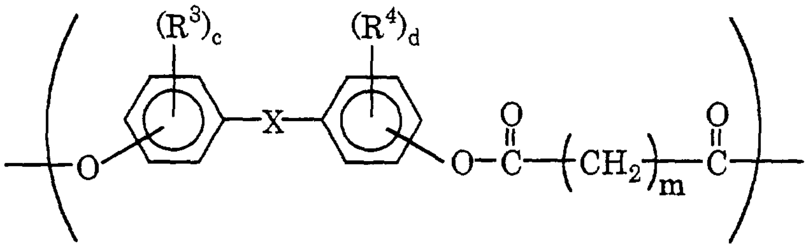

(2)

wherein $R^3$ and $R^4$ are $C_1$-$C_6$ alkyl or phenyl, and may be the same or different; X is a single bond, $C_1$-$C_{20}$ alkylene, $C_1$-$C_{20}$ alkylidene, $C_5$-$C_{20}$ cycloalkylene, $C_5$-$C_{20}$ cycloalkylidene, $-SO_2-$, -SO-, -S-, -O- or -CO-; c and d are independently an integer of 0 to 4; and m is an integer of 5 to 20.

**3.** The polycarbonate resin composition according to claim 2, wherein the structural unit of Formula 1 and the structural unit of Formula 2 are contained in a proportion such that an amount of a polymethylenedicarboxylic acid in the structural unit of Formula 2 is 1 to 25 mol% of the total amount of a dihydric phenol in the component A.

**4.** The polycarbonate resin composition according to any one of claims 1 to 3,
wherein a viscosity-average molecular weight of the copolyester carbonate is 10,000 to 40,000.

**5.** The polycarbonate resin composition according to any one of claims 1 to 4,
wherein the copolyester carbonate or the polycarbonate resin mixture contains a polycarbonate-polyorganosiloxane copolymer in an amount of 0.1 to 10% by mass.

**6.** The polycarbonate resin composition according to claim 5, wherein the polyorganosiloxane is polydimethylsiloxane, polydiethylsiloxane or polymethylphenylsiloxane.

**7.** The polycarbonate resin composition according to any one of claims 1 to 6,
wherein the functionalized silicone compound is a polymer or a copolymer having a basic structure represented by the following formula:

$$R^5{}_eR^6{}_fSiO_{(4-e-f)/2}$$

wherein $R^5$ is alkoxy, aryloxy, polyoxyalkylene, hydrogen, hydroxyl, carboxyl, cyanol, amino, mercapto or epoxy; $R^6$ is $C_1$-$C_{12}$ hydrocarbon group; and e and f are numbers satisfying the following expressions:

$$0 < e \leq 3,$$

$$0 \leq f < 3,$$

and

$$0 < e + f \leq 3.$$

**8.** The polycarbonate resin composition according to any one of claims 1 to 7, wherein the core-shell type rubber-like graft elastomer has a two-layer structure comprising a soft rubber-like core and a hard resinous shell which

are formed by polymerizing at least one vinyl monomer in the presence of a rubber-like polymer.

**9.** The polycarbonate resin composition according to any one of claims 1 to 8, further comprising (D) 0.02 to 5 parts by mass of a polyfluoroolefin resin based on 100 parts by mass of the copolyester carbonate or the polycarbonate resin mixture.

**10.** The polycarbonate resin composition according to any one of claims 1 to 9, which is made into a shaped article.

**11.** The polycarbonate resin composition according to any one of claims 1 to 9, which is made into a housing or part for electric and electronic devices.

**12.** A polycarbonate resin composition comprising:

100 parts by mass of a resin mixture comprising (A') 1 to 99% by mass of a copolyester carbonate having an aliphatic segment or a polycarbonate resin mixture containing the copolyester carbonate and (B') 99 to 1% by mass of a styrene resin; and
(C') 0.01 to 5 parts by mass of a polyfluoroolefin resin.

**13.** The polycarbonate resin composition according to claim 12, wherein the copolyester carbonate is a copolymer comprising an aromatic polycarbonate segment having a structural unit represented by Formula 1:

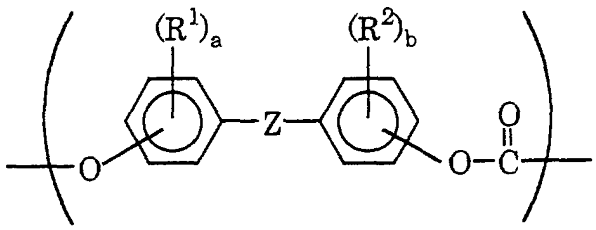

(1)

wherein $R^1$ and $R^2$ are $C_1$-$C_6$ alkyl or phenyl, and may be the same or different; Z is a single bond, $C_1$-$C_{20}$ alkylene, $C_1$-$C_{20}$ alkylidene, $C_5$-$C_{20}$ cycloalkylene, $C_5$-$C_{20}$ cycloalkylidene, $-SO_2-$, -SO-, -S-, -O- or -CO-; and a and b are independently an integer of 0 to 4, and
a polyester segment having a structural unit represented by Formula 2:

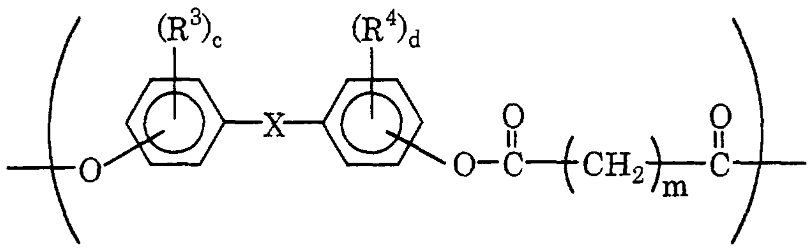

(2)

wherein $R^3$ and $R^4$ are $C_1$-$C_6$ alkyl or phenyl, and may be the same or different; X is a single bond, $C_1$-$C_{20}$ alkylene, $C_1$-$C_{20}$ alkylidene, $C_5$-$C_{20}$ cycloalkylene, $C_5$-$C_{20}$ cycloalkylidene, $-SO_2-$, -SO-, -S-, -O- or -CO-; c and d are independently an integer of 0 to 4; and m is an integer of 5 to 20.

**14.** The polycarbonate resin composition according to claim 13, wherein the structural unit of Formula 1 and the structural unit of Formula 2 are contained in a proportion such that an amount of a polymethylenedicarboxylic acid in the structural unit of Formula 2 is 1 to 25 mol% of the total amount of a dihydric phenol in the component A'.

**15.** The polycarbonate resin composition according to any one of claims 12 to 14, wherein a viscosity-average molecular weight of the copolyester carbonate is 10,000 to 40,000.

**16.** The polycarbonate resin composition according to any one of claims 12 to 15, wherein the copolyester carbonate

or the polycarbonate resin mixture contains a polycarbonate-polyorganosiloxane copolymer in an amount of 0.1 to 10% by mass.

**17.** The polycarbonate resin composition according to claim 16, wherein the polyorganosiloxane is polydimethylsiloxane, polydiethylsiloxane or polymethylphenylsiloxane.

**18.** The polycarbonate resin composition according to any one of claims 12 to 17, wherein the styrene resin is a polymer produced by polymerizing a monomer or a monomer mixture comprising 20 to 100% by mass of an aromatic monovinyl monomer, 0 to 60% by mass of a vinyl cyanide monomer, and 0 to 50% by mass of another vinyl monomer copolymerizable with the aromatic monovinyl monomer and/or the vinyl cyanide monomer.

**19.** The polycarbonate resin composition according to any one of claims 12 to 17, wherein the styrene resin is a rubber-modified styrene resin.

**20.** The polycarbonate resin composition according to claim 19, wherein the resin mixture comprises 70 to 98% by mass of the component A' and 30 to 2% by mass of the component B'.

**21.** The polycarbonate resin composition according to any one of claims 12 to 20, further comprising (D') 0.1 to 10 parts by mass of a functionalized silicone compound based on 100 parts by mass of the resin mixture.

**22.** The polycarbonate resin composition according to any one of claim 21,
wherein the functionalized silicone compound is a polymer or a copolymer having a basic structure represented by the following formula:

$$R^5{}_eR^6{}_fSiO_{(4-e-f)/2}$$

wherein $R^5$ is alkoxy, aryloxy, polyoxyalkylene, hydrogen, hydroxyl, carboxyl, cyanol, amino, mercapto or epoxy; $R^6$ is $C_1$-$C_{12}$ hydrocarbon group; and e and f are numbers satisfying the following expressions:

$$0 < e \leq 3,$$

$$0 \leq f < 3,$$

and

$$0 < e + f \leq 3.$$

**23.** The polycarbonate resin composition according to any one of claims 12 to 22, further comprising (E') 1 to 100 parts by mass of an inorganic filler based on 100 parts by mass of the resin mixture.

**24.** The polycarbonate resin composition according to claim 23, wherein the inorganic filler is at least one inorganic substance selected from the group consisting of talc, mica, kaolin, diatomaceous earth, calcium carbonate, calcium sulfate, barium sulfate, glass fiber, carbon fiber and potassium titanate fiber.

**25.** The polycarbonate resin composition according to any one of claims 12 to 24, which is made into a shaped article.

**26.** The polycarbonate resin composition according to any one of claims 12 to 24, which is made into a housing or part for electric and electronic devices.

FIG. 1